# EUROPÄISCHE PATENTSCHRIFT

(11) **EP 0 769 341 B1**
(45) Veröffentlichungstag und Bekanntmachung des Hinweises auf die Patenterteilung: **30.01.2002**
(21) Anmeldenummer: 96115995.1
(22) Anmeldetag: 05.10.1996
(51) Int. Cl.: B23C 5/22

(54) **Werkzeug zur spanenden Bearbeitung von Werkstücken**
Tool for working pieces by chipcutting
Outil pour l'usinage de pièces par enlèvement de copeaux

(30) Priorität: 21.10.1995 DE 29516668 U
(43) Veröffentlichungstag der Anmeldung: 23.04.1997
(73) Patentinhaber: Ingersoll Werkzeuge GmbH, 57299 Burbach (DE)
(72) Erfinder: Müller, Norbert, 57299 Burbach (DE)
(74) Vertreter: Valentin, Ekkehard, Dipl.-Ing.

(56) Entgegenhaltungen:
- EP-A- 0 287 711

## Beschreibung

Die Neuerung betrifft ein Werkzeug zur spanenden Schlicht-Bearbeitung von Werkstücken,
- insbesondere einen Fräsmesserkopf,
- wie z.B. einen Stirnschnitt-Fräskopf,
- mit einem scheibenförmigen - rotativ antreibbaren - Messerträger-Grundkörper, und
- mit einer Vielzahl von als Wendeschneidplatten ausgeführten Messerplatten,
- bei welchem die Wendeschneidplatten im Umfangsbereich des Messerträger-Grundkörpers gleichmäßig verteilt sowie lösbar, austauschbar und/oder umsetzbar angeordnet sind,
- bei welchem Wendeschneidplatten sowohl an der Umfangs-Mantelfläche als auch an der Stirnfläche des Messerträger-Grundkörpers montiert sind,
- bei welchem die an der Umfangs-Mantelfläche des Messerträger-Grundkörpers vorgesehenen Wendeschneidplatten im wesentlichen in Richtung von dessen Rotationsachse - stehend - orientiert sind,
- bei welchem die an der Stirnfläche des Messerträger-Grundkörpers vorgesehenen Wendeschneidplatten im wesentlichen quer zu dessen Rotationsachse - liegend - orientiert sind,
- bei welchem die jeweils in Wirkstellung befindlichen Schneiden aller - stehend und liegend - orientierten Wendeschneidplatten in radialer und in axialer Richtung spanen können, und
- bei welchem jede Wendeschneidplatte durch eine einzelne, einen flächenzentralen Durchlaß durchsetzende und rechtwinklig zu ihren beiden Seitenflächen gerichtet angreifende Spannschraube in einer Vertiefung bzw. Tasche des Messerträger-Grundkörpers festlegbar ist.

Bei stehend orientierter Anordnung der Wendeschneidplatten sind diese natürlich nicht mit ihren beiden Seitenflächen exakt parallel zur Rotationsachse des Messerträger-Grundkörpers ausgerichtet, sondern sie haben zumindest in Vorschubrichtung des Werkzeuges eine deren Freiwinkel bestimmende Neigungslage. Entsprechendes gilt natürlich auch für die mit liegender Orientierung an der Stirnfläche des Messerträger-Grundkörpers angeordneten Wendeschneidplatten. D.h. deren beide Seitenflächen nehmen eine gegen die Rotationsebene des Messerträger-Grundkörpers innerhalb gewisser Grenzen geneigte Lage ein. Werkzeuge mit der vorstehend spezifizierten Merkmalsausstattung sind bereits bekannt und stehen bspw. als sogenannte Schlicht-Planfräser im praktischen Einsatz, deren Schruppstationen von den an den Umfangs-Mantelflächen des Messerträger-Grundkörpers sitzenden Wendeschneidplatten gebildet sind, während ihre Schlichtstationen aus den an der Stirnfläche des Messerträger-Grundkörpers montierten Wendeschneidplatten bestehen.

Bei den zum Stand der Technik gehörenden Schlicht-Planfräsern haben die die Schruppstationen bildenden Wendeschneidplatten und die die Schlichtstationen bildenden Wendeschneidplatten nicht nur eine voneinander verschiedene Ausgestaltung. Vielmehr kommen sie auch an einem Werkzeug noch in unterschiedlicher Anzahl zum Einsatz, und zwar in der Weise, daß die Anzahl der die Schruppstationen bildenden Wendeschneidplatten wesentlich größer ist als die Anzahl der die Schlichtstationen bildenden Wendeschneidplatten. Es ist ohne weiteres üblich, das Verhältnis der Anzahl der Schlichtstationen zu den Schruppstationen mit etwa 1:4 oder 1:6 zu wählen. So kann bspw. bei einem Schlicht-Planfräser mit insgesamt vierzig Schneidstationen die Anzahl der Schlichtstationen bei acht und die Anzahl der Schruppstationen bei zweiunddreißig liegen. Möglich wäre es aber auch, bei einem Schlicht-Planfräser mit insgesamt vierundzwanzig Schneidstationen vier Schlichtstationen und zwanzig Schruppstationen vorzusehen.

Obwohl bei den vorstehend erwähnten Schlicht-Planfräsern jede der zum Einsatz gelangenden Wendeschneidplatten sich relativ zum Messerträger-Grundkörper in vier verschiedenen Wendelagen montieren läßt, also ohne Zwischenschaltung von Nachschleifvorgängen eine entsprechende Standzeitverlängerung gewährleisten kann, haben diese noch keinen optimalen praktischen Gebrauchswert. Abgesehen davon, daß zwei verschiedene Bauformen von Wendeschneidplatten für die Schruppstationen und die Schlichtstationen benötigt werden und bereitgehalten werden müssen, erweist es sich auch noch als nachteilig, daß an jeder Werkzeugeinheit sehr unterschiedliche Anzahlen von Schruppstationen und Schlichtstationen vorhanden sind und auch dementsprechend unterschiedliche Stückzahlen von Schrupp- und Schlicht-Wendeschneidplatten verfügbar gehalten werden müssen, um bei Bedarf eine völlige Neubestückung des betreffenden Schrupp/Schlicht-Planfräsers möglich zu machen.

Der Neuerung liegt die Aufgabe zugrunde, ein Werkzeug mit der eingangs spezifizierten Merkmalsausstattung anzugeben, welches es möglich macht, die Einsatzdauer der zu seiner Bestückung dienenden Wendeschneidplatten wesentlich zu erhöhen, nämlich im günstigsten Fall zu verdoppeln.

Gelöst wird diese Aufgabe nach der Neuerung grundsätzlich dadurch,
- daß der Umfangsbereich des Messerträger-Grundkörpers gleichmäßig und abwechselnd einerseits an seiner Umfangs-Mantelfläche und andererseits an seiner Stirnfläche Vertiefungen bzw. Taschen zur Aufnahme je einer Wendeschneidplatte aufweist,
- daß sämtliche - sowohl die stehend als auch die liegend orientierten - Wendeschneidplatten eine übereinstimmende Auslegung bzw. Gestaltung haben,
- daß an jeder Wendeschneidplatte sowohl im Bereich ihrer beiden Seitenflächen als auch im Bereich ihrer beiden Endflächen zu jeder Deck- und Grundfläche hin eine Schneidkante ausgebildet ist,
- daß dabei sämtliche an die Seitenflächen und die Endflächen angrenzenden Schneidkanten gleiche Schneidgeometrie haben,
- daß in deren Deck- und Grundflächen sowohl entlang der beiden Seitenflächen als auch entlang der beiden Endflächen jeweils Spanmulden eingearbeitet sind,
- und daß alle entlang der Seitenflächen verlaufenden - langen - Schneidkanten eine Bogenschliff-Kontur aufweisen.

Vorteilhaft bei einer solchen Ausgestaltung eines gattungsgemäßen Werkzeuges ist nicht nur, daß jede Wendeschneidplatte sowohl zur Bildung einer Schruppstation als auch zur Bildung einer Schlichtstation benutzt werden kann, sondern daß sie sich für jeden dieser beiden Einsatzzwecke auch noch in vier verschiedenen Wendelagen montieren läßt, also - ohne zwischengeschalteten Nachschleifvorgang - achtfach zum Arbeitseinsatz genutzt werden kann. Damit wird also der Gebrauchswert jeder einzelnen erfindungsgemäß eingesetzten Wendeschneidplatte gegenüber der herkömmlichen Einsatzweise um 100% verbessert. Vorteilhaft ist hierbei auch, daß nicht nur an den Seitenflächen, sondern auch an den sich im wesentlichen quer dazu erstreckenden Endflächen jeweils eine Schneidkante verfügbar gemacht werden können.

Es lassen sich Wendeschneidplatten benutzen, an denen die Seitenflächen im wesentlichen rechteckig oder quadratisch begrenzt sind und sich Schneidkanten an den den Deck- und Grundflächen benachbarten, parallelen Längskanten befinden. Auch können die Grund- und Deckflächen rechteckig begrenzt sein, wobei sich dann Schneidkanten an den den Endflächen benachbarten, parallelen Querkanten befinden. Bewährt hat es sich auch, wenn von den Seitenflächen zu den Endflächen hin Übergangsradien ausgebildet sind und diese Radienbereiche dann Schneidkanten bilden.

Um ein dauerhaft einwandfreies Arbeiten der Werkzeuge gewährleisten zu können, schlägt die Neuerung schließlich noch vor, daß die jeweils in Wirkstellung befindlichen Schneidkanten der an der Umfangs-Mantelfläche des Messerträger-Grundkörpers gelegenen Wendeschneidplatten in radialer Richtung über die jeweils in Wirkstellung befindlichen Schneidkanten der an der Stirnfläche des Messerträger-Grundkörpers gelegenen Wendeschneidplatten geringfügig vorstehen, während die jeweils in Wirkstellung befindlichen Schneidkanten der an der Stirnfläche des Messerträger-Grundkörpers gelegenen Wendeschneidplatten in axialer Richtung über die jeweils in Wirkstellung befindlichen Schneidkanten der an der Umfangs-Mantelfläche des Messerträger-Grundkörpers gelegenen Wendeschneidplatten geringfügig vorsteht.

An einem in der Zeichnung dargestellten Ausführungsbeispiel wird der Gegenstand der Neuerung nachfolgend ausführlich erläutert. Es zeigen
- Figur 1: die Stirnansicht eines Ausführungsbeispiels eines erfindungsgemäßen Schlicht-Planfräsers,
- Figur 2: den Schlicht-Planfräser nach Fig. 1 in der Seitenansicht,
- Figur 3: in stark vergrößertem Maßstab und räumlicher Darstellung eine in jeder Raumdimension im wesentlichen rechteckig begrenzte Wendeschneidplatte für Bestükkung eines Schlicht-Planfräsers nach den Fig. 1 und 2 an seiner Stirnfläche und an seiner Umfangs-Mantelfläche,
- Figur 4: einen Schnitt entlang der Linie IV-IV durch die Wendeschneidplatte nach Fig. 3,
- Figur 5: eine Ansicht in Richtung des Pfeiles V nach Fig. 3,
- Figur 6: eine Ansicht der Wendeschneidplatte nach Fig. 3 in Pfeilrichtung VI gesehen,
- Figur 7: in schematisch vereinfachter Darstellung die Zuordnung einer Wendeschneidplatte zum Messerträger-Grundkörper an dessen Umfangs-Mantelfläche für die Durchführung eines Schrupp-Arbeitsgangs, und
- Figur 8: ebenfalls in schematisch vereinfachter Darstellung die Zuordnung einer Wendeschneidplatte zum Messerträger-Grundkörper an dessen Stirnfläche für die Durchführung eines Schlicht-Arbeitsgangs, während
- Figur 9: die gegenseitige Lagenzuordnung der Wendeschneidplatten für den Schrupp-Arbeitsgang nach Fig. 7 und der Wendeschneidplatten für den Schlicht-Arbeitsgang nach Fig. 8 am Messerträger-Grundkörper eines Schlicht-Planfräsers nach den Fig. 1 und 2 in stark vergrößertem Maßstab und schematisierter Darstellung wiedergibt.

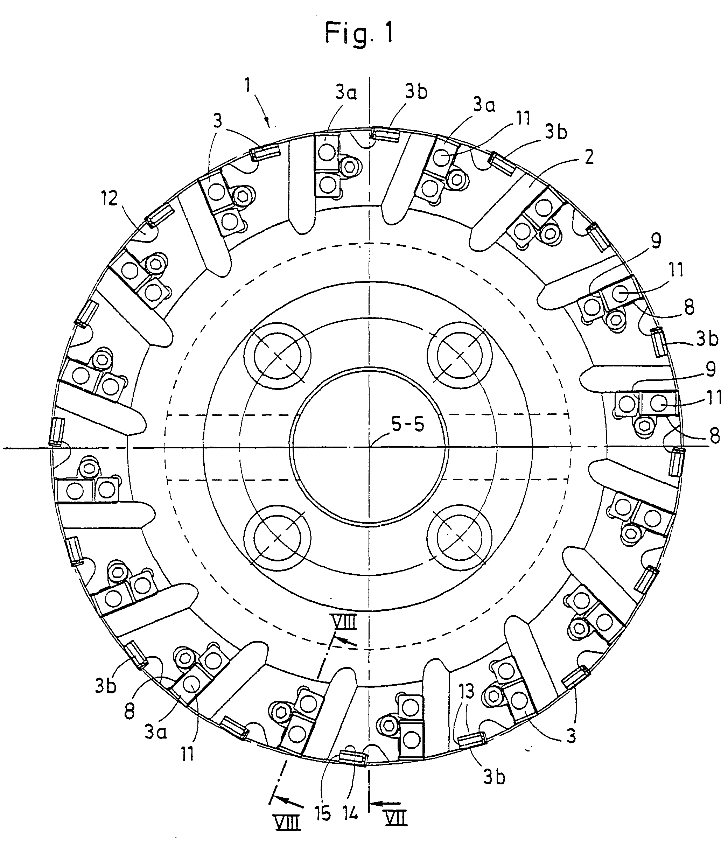

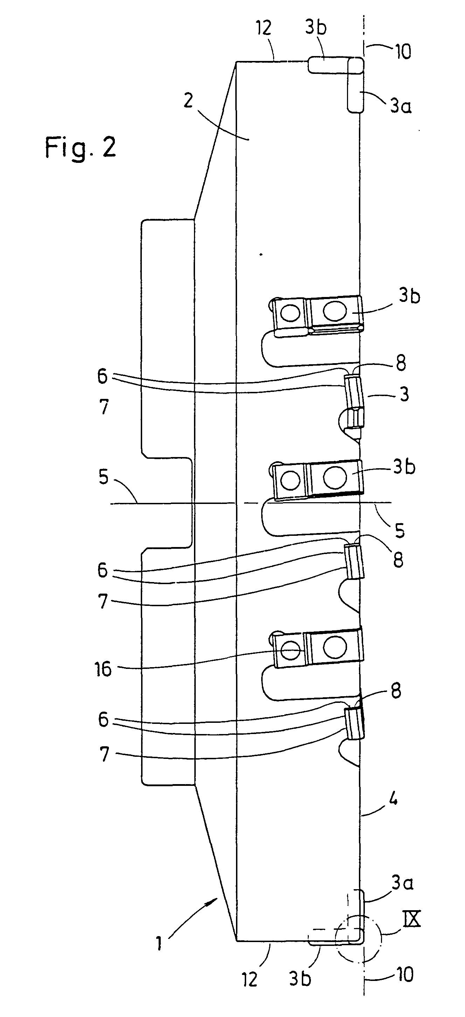

Die Fig. 1 und 2 der Zeichnung zeigen als Werkzeug zur spanenden Bearbeitung von Werkstücken einen Fräs-Messerkopf 1, der im Beispiel grundsätzlich als ein sogenannter Stirnschnitt-Fräskopf ausgeführt ist. Dieser weist im Umfangsbereich eines scheibenförmigen Messerträger-Grundkörpers 2 eine Vielzahl von lösbar sowie austauschbar und/oder umsetzbar angeordneten Messerplatten auf, deren jede als eine sogenannte Wendeschneidplatte 3 ausgeführt ist.

Die Ausbildung des Fräs-Messerkopfs 1 als Stirnschnitt-Fräskopf bedingt, daß sein Messerträger-Grundkörper 2 mindestens an seiner Stirnfläche 4 im Umfangsbereich mit Wendeschneidplatten 3a besetzt ist, von denen jede mit Bezug auf die Rotationsachse 5-5 des Fräs-messerkopfs 1 bzw. des Messerträger-Grundkörpers 2 im wesentlichen quer bzw. liegend ausgerichtet ist.

Die Anordnung der Wendeschneidplatten 3a an der Stirnfläche 4 des Messerträger-Grundkörpers 2 ist dabei so getroffen, daß deren jeweils in Wirkstellung befindliche Schneiden sowohl in radialer als auch in axialer Richtung spanen können, wenn der Fräs-Messerkopf 1 auf ein Werkstück zur Einwirkung gebracht wird.

Jede einzelne Wendeschneidplatte 3a ist in einer Vertiefung bzw. Tasche 6 aufgenommen, die in der Stirnfläche 4 des Messerträger-Grundkörpers 2 vorgesehen sind, wie das deutlich in Fig. 2 zu sehen ist. Jede dieser Vertiefungen bzw. Taschen 4 wird dabei von einer Grund-Sitzfläche 7, einer Längsseiten-Sitzfläche 8 und einer Querseiten-Sitzfläche 9 begrenzt. Die gegenseitige Zuordnung von Grund-Sitzfläche 7 und Längsseiten-Sitzfläche 8 der Vertiefungen bzw. Taschen 6 geht aus Fig. 2 der Zeichnung hervor, während die gegenseitige Zuordnung der Längsseiten-Sitzflächen 8 und der Querseiten-Sitzflächen 9 der Fig. 1 dieser Zeichnung entnommen werden kann.

Die Grund-Sitzfläche jeder Vertiefung bzw. Tasche 5 hat zumindest in Vorschubrichtung des Fräs-Messerkopfs 1 eine den Freiwinkel der Wendeschneidplatten 3a bestimmende Neigungslage gegen die Rotationsebene 10-10 des Messerträger-Grundkörpers 2. Hingegen weisen die Längsseiten-Sitzflächen 8 und die Querseiten-Sitzflächen 9 relativ zur Grund-Sitzfläche 7 eine Ausrichtung und Anordnung auf, welche durch die vorgegebene Grundform der zum Einsatz gelangenden Wendeschneidplatten 3 bestimmt wird.

In Fig. 1 der Zeichnung wird noch gezeigt, daß jede einzelne Wendeschneidplatte 3a in der Vertiefung bzw. Tasche 6 an der Stirnfläche 4 des Messerträger-Grundkörpers 2 durch eine einzelne, flächenzentral angreifende Spannschraube 11 lösbar und austauschbar festgelegt werden kann.

Da die in den Fig. 1 und 2 der Zeichnung gezeigte Bauform des Fräs-Messerkopfs 1 nicht nur als Stirn-Fräskopf zur Schlicht- bzw. Feinschlichtbearbeitung von Werkstückflächen benutzt werden soll, sondern auch einen Einsatz als sogenannter Schrupp/Schlicht-Planfräser ermöglicht, ist der Messerträger-Grundkörper 2 auch noch an seiner Umfangs-Mantelfläche 12 mit Wendeschneidplatten 3b bestückt.

Im Unterschied zu den Wendeschneidplatten 3a an der Stirnfläche 4 des Messerträger-Grundkörpers 2 sind die Wendeschneidplatten 3b an dessen Umfangs-Mantelfläche 12 im wesentlichen in Richtung der Rotationsachse 5-5 des Messerträger-Grundkörpers orientiert, also sozusagen stehend angeordnet, wie das aus Fig. 2 zu entnehmen ist.

Wie die Wendeschneidplatten 3a an der Stirnfläche 4 des Messerträger-Grundkörpers 2, so haben auch die Wendeschneidplatten 3b an der Umfangs-Mantelfläche 12 des Messerträger-Grundkörpers 2 eine in Umfangsrichtung gleichmäßig verteilte Anordnung.

Jede Wendeschneidplatte 3b liegt ebenfalls in einer Vertiefung bzw. Tasche 13, welche in die Umfangs-Mantelfläche 12 des Messerträger-Grundkörpers 2 eingearbeitet ist sowie von einer Grund-Sitzfläche 14, einer Längsseiten-Sitzfläche 15 sowie einer Querseiten-Sitzfläche 16 begrenzt wird. Auch bei den Vertiefungen bzw. Taschen 13 ist die Grund-Sitzfläche 14 am Messerträger-Grundkörper 2 zumindest in Vorschubrichtung des Fräs-Messerkopfes 1 mit einer den Freiwinkel der Wendeschneidplatte 3b bestimmenden Neigungslage gegenüber der Umfangs-Mantelfläche 12 des Messerträger-Grundkörpers 2 vorgesehen.

Eine Besonderheit des Fräs-Messerkopfes 1 nach den Fig. 1 und 2 der Zeichnung liegt darin, daß der Umfangsbereich des Messerträger-Grundkörpers 2 gleichmäßig und abwechselnd einerseits an seiner Stirnfläche 4 und andererseits an seiner Umfangs-Mantelfläche 12 mit den Vertiefungen bzw. Taschen 6 und 13 zur Aufnahme je einer Wendeschneidplatte 3a und 3b versehen ist. D.h. jeweils im Abstandsbereich zwischen zwei an der Stirnfläche des Messerträger-Grundkörpers 2 montierten Wendeschneidplatten 3a ist auch an der Umfangs-Mantelfläche 12 desselben eine Wendeschneidplatte 3b montiert und umgekehrt. Die dem Fräs-Messerkopf 1 eigenen Schneidstationen sind bei dieser Ausgestaltung also immer zur einen Hälfte an der Stirnfläche 4 des Messerträger-Grundkörpers 2 und zur anderen Hälfte an der Umfangs-Mantelfläche 12 des Messerträger-Grundkörpers 2 vorgesehen und dabei gleichmäßig über den Umfang verteilt angeordnet.

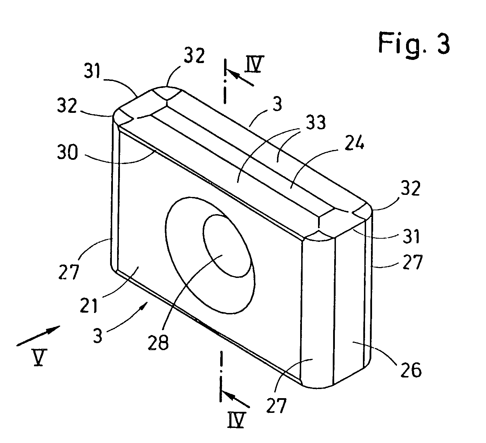

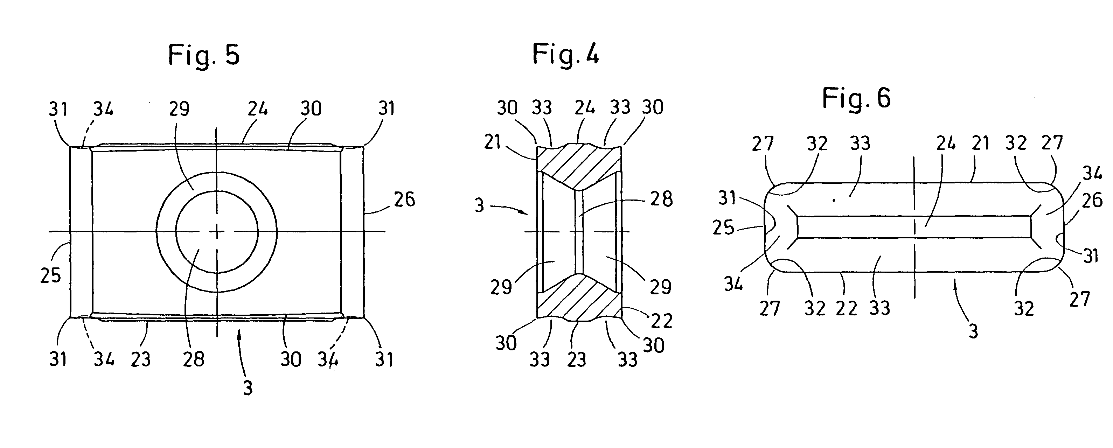

Diese besondere Ausstattung bzw. Ausgestaltung ist Voraussetzung dafür, daß zur Bildung des Fräs-Messerkopfes 1 sämtliche am Messerträger-Grundkörper 2 zu montierenden Wendeschneidplatten 3a und 3b eine übereinstimmende Ausbildung bzw. Gestaltung erhalten können und infolgedessen nur eine einzige Type einer Wendeschneidplatte 3 benötigt wird und zur Verfügung gehalten werden muß. Eine solche Wendeschneidplatte 3 ist in den Fig. 3 bis 6 der Zeichnung gezeigt. Jede Wendeschneidplatte 3 nach den Fig. 3 bis 6 hat eine im wesentlichen rechteck-quaderförmige Gestalt mit zwei zueinander parallelen aber voneinander abgewendeten Seitenflächen 21 und 22, mit einer Grundfläche 23 und einer Deckfläche 24, die zueinander parallel verlaufen und voneinander abgewendet sind sowie zwei wiederum zueinander parallelen und voneinander abgewendeten Endflächen 25 und 26, wie das die Fig. 4 bis 6 erkennen lassen.

Um dort, wo jeweils die Seitenflächen 21 und 22 mit.den Endflächen 25 und 26 an einer Wendeschneidplatte 3 zusammentreffen, die Ausbildung scharfkantiger Übergänge zu vermeiden, sind dort jeweils Übergangsradien 27 vorgesehen, wie das die Fig. 3 und 6 der Zeichnung erkennen lassen. Quer durch das Flächenzentrum der Seitenflächen 21 und 22 ist in jede Wendeschneidplatte 3 ein Durchlaß 28 eingearbeitet, in den von jeder der Seitenflächen 21 und 22 her eine Ansenkung 29 einmündet. Durchlaß 28 und Ansenkungen 29 dienen der Aufnahme der bereits weiter oben erwähnten Spannschrauben 11 zur Befestigung der Wendeschneidplatten 3 am Messerträger-Grundkörper 2.

Die in den Fig. 3 bis 6 der Zeichnung dargestellten Wendeschneidplatten 3 haben eine solche Ausgestaltung, daß jede derselben an einem Fräs-Messerkopf 1 der vorstehend anhand der Fig. 1 und 2 bereits beschriebenen Bauart in acht verschiedenen Benutzungspositionen zum Einsatz gebracht werden können, bevor ein Nachschleifen ihrer Schneidkanten nötig ist. Jede Wendeschneidplatte 3 mit der aus den Fig. 3 bis 6 ersichtlichen Ausgestaltung läßt sich sowohl als Wendeschneidplatte 3a in vier verschiedenen Einbaupositionen an der Stirnfläche 4 des Messerträger-Grundkörpers 2 anbringen und kann darüber hinaus auch noch als Wendeschneidplatte 3b in vier verschiedenen Einbaupositionen der Umfangs-Mantelfläche 12 des Messerträger-Grundkörpers 2 zugeordnet werden. Infolgedessen hat ein Fräs-Messerkopf 1 nach den Fig. 1 und 2 mit Wendeschneidplatten 3 nach den Fig. 3 bis 6 einen beträchtlich erhöhten Gebrauchswert.

Die Besonderheit der Wendeschneidplatten 3 nach den Fig. 3 bis 6 besteht darin, daß sie vier - lange - Schneidkanten 30 aufweisen, von denen sich zwei entlang den Längsrändern der Seitenfläche 21 und die beiden anderen entlang den Längsrändern der Seitenfläche 22 erstrecken. Jede der Schneidkanten 30 hat dabei keinen absolut geradlinigen Verlauf, sondern vielmehr eine sogenannte Bogenschliff-Kontur, wie sie in Fig. 3 der Zeichnung erkennbar ist.

Vier weitere - kurze - Schneidkanten 31 erstrecken sich jeweils mit geradlinigem Verlauf entlang der beiden Endflächen 25 und 26, d.h., sie sind im rechten Winkel zu den Schneidkanten 30 verlaufend paarweise den Querkanten der Endflächen 25 und 26 zugeordnet. Schließlich ist jede Wendeschneidplatte 30 noch mit acht viertelkreisförmig verlaufenden Schneidkanten 32 bestückt, von welchen jede entlang einem Übergangsradius 27 verläuft, der von einer der Seitenflächen 21 oder 22 zu einer der Endflächen 25 und 26 führt.

Je zwei mit Bogenschliff-Kontur versehene - lange - Schneidkanten 30 und zwei - kurze - gerade Schneidkanten 31 sowie vier Schneidkanten 32 sind einerseits an der Grundfläche 23 und andererseits an der Deckfläche 24 einer Wendeschneidplatte 3 anliegend ausgebildet.

Bei den Wendeschneidplatten 3, deren sämtliche Schneidkanten 30, 31 und 32 positive Keilwinkel haben, sind in die Grundfläche 23 und in die Deckfläche 24 jeweils Spanmulden 33 eingeformt, die sich entlang der Seitenflächen 21 und 22 erstrecken. Gleichartige Spanmulden 34 sind aber auch in die Grundfläche 23 und die Deckfläche 24 eingeformt, welche sich entlang der Endflächen 25 und 26 erstrecken. Im Bereich der Übergangsradien 27 gehen dabei auch jeweils eine Spanmulde 33 und eine Spanmulde 34 ineinander über, um auch die dort befindlichen, viertelkreisförmig verlaufenden Schneidkanten 32 mit positivem Keilwinkel auszustatten.

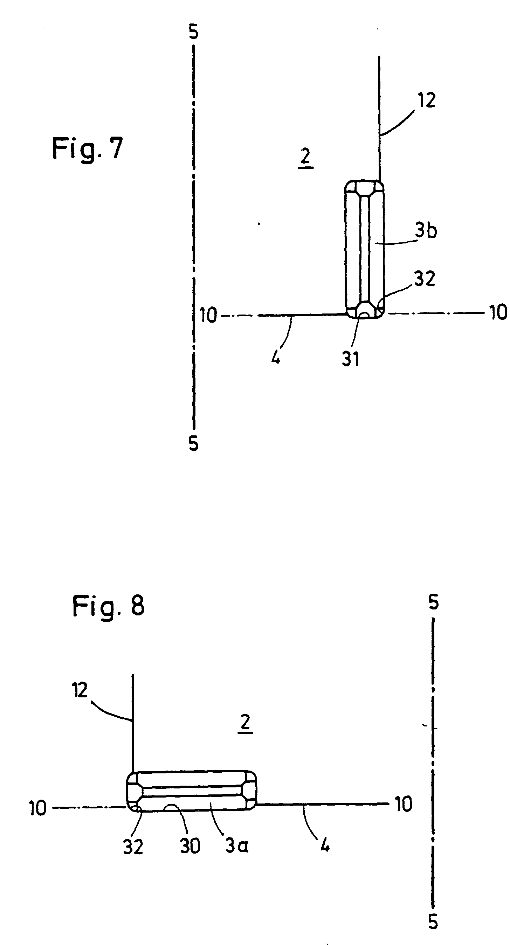

In Fig. 7 der Zeichnung ist zu sehen, daß bei den der Umfangs-Mantelfläche 12 des Messerträger-Grundkörpers 2 zugeordneten Wendeschneidplatten 3b jeweils eine kreisbogenförmig gekrümmt verlaufende Schneidkante 32 als eine Hauptschneidkante arbeitet, während die daran anschließende, kurze Schneidkante 31 die zugehörige Nebenschneidkante bildet, weil die Wendeschneidplatte 3b sozusagen mit stehender Anordnung am Messerträger-Grundkörper 2 montiert ist.

Der Fig. 8 läßt sich entnehmen, daß bei an der Stirnfläche 4 des Messerträger-Grundkörpers 2 montierten, also gewissermaßen zur Rotationsebene 10-10 des Fräs-Messerkopfs 1 liegend montierten Wendeschneidplatten 3a eine kreisbogenförmig gekrümmte Schneidkante 32 als Hauptschneide wirkt, während eine geradlinige Schneidkante 30 an der zu bearbeitenden Werkstückfläche in Tätigkeit tritt.

Da jede Wendeschneidplatte 3 nach den Fig. 3 bis 6 sowohl für die Einbauposition als Wendeschneidplatte 3a nach den Fig. 1, 2 und 8 als auch als Wendeschneidplatte 3b für die Einbauposition nach den Fig. 1, 2 und 7 jeweils vier Sätze von Schneidkanten 30, 31 und 32 zur Verfügung stellen kann, ist ohne weiteres klar, daß und warum sich jede Wendeschneidplatte 3 in der aus den Fig. 3 bis 6 ersichtlichen Gestaltungsform an ein und demselben Messerträger-Grundkörper ohne jede Nachbearbeitung in acht verschiedenen Einbaupositionen verwenden läßt, was sich natürlich auf ihre Gesamtlebensdauer positiv auswirkt.

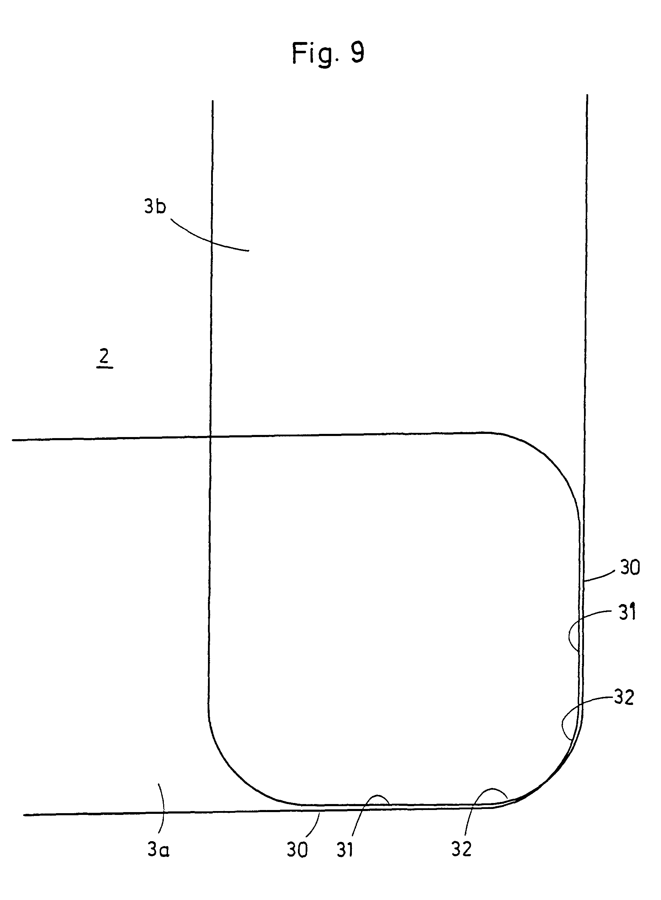

In Fig. 9 der Zeichnung ist in stark vergrößertem Maßstab der in Fig. 2 mit IX gekennzeichnete Ausschnittbereich des Fräs-Messerkopfs 1 zu sehen. Dort wird gezeigt, daß die an der Stirnfläche 4 des Messerträger-Grundkörpers 2 montierten Wendeschneidplatten 3a mit ihrer Nebenschneidkante 30 in axialer Richtung geringfügig, bspw. um ein Maß von 0,05 mm über die Nebenschneidkante 31 der an der Umfangs-Mantelfläche 12 des Messerträger-Grundkörpers 2 befestigten Wendeschneidplatten 3b vorstehen. Andererseits wird dort aber auch gezeigt, daß die an der Umfangs-Mantelfläche 12 des Messerträger-Grundkörpers 2 sitzenden Wendeschneidplatten 3b mit ihrer Nebenschneidkante 30 die Nebenschneidkante 31 der an der Stirnfläche 4 des Messerträger-Grundkörpers 2 montierten Wendeschneidplatten 3a in Radialrichtung geringfügig, bspw. ebenfalls um ein Maß von 0,05 mm überragen. Es hat sich gezeigt, daß durch diese Relativanordnung der beiden Gruppen von Wendeschneidplatten 3a und 3b am Messerträger-Grundkörper 2 eine optimale Arbeitsweise des als Schlicht-Planfräser eingesetzten Fräs-Messerkopfes 1 erreicht werden kann.

## Patentansprüche

1. Werkzeug zur spanenden Schlicht-Bearbeitung von Werkstücken
- insbesondere Fräsmesserkopf (1),
- wie z.B. Stirnschnitt-Fräskopf,
- mit einem scheibenförmigen - rotativ antreibbaren - Messerträger-Grundkörper (2), und
- mit einer Vielzahl von als Wendeschneidplatten (3) ausgeführten Messerplatten,
- bei welchem die Wendeschneidplatten (3) im Umfangsbereich des Messerträger-Grundkörpers (2) gleichmäßig verteilt sowie lösbar, austauschbar und/oder umsetzbar angeordnet sind,
- bei welchem Wendeschneidplatten (3) sowohl an der Umfangs-Mantelfläche (12) als auch an der Stirnfläche (4) des Messerträger-Grundkörpers (2) montiert sind,
- bei welchem die an der Umfangs-Mantelfläche (12) des Messerträger-Grundkörpers (2) vorgesehenen Wendeschneidplatten (3b) im wesentlichen in Richtung von dessen Rotationsachse (5-5) - stehend - orientiert sind,
- bei welchem die an der Stirnfläche (4) des Messerträger-Grundkörpers (2) vorgesehenen Wendeschneidplatten (3a) im wesentlichen quer zu dessen Rotationsachse (5-5) - liegend - orientiert sind,
- bei welchem die jeweils in Wirkstellung befindlichen Schneiden (30, 31, 32) aller - stehend und liegend - orientierten Wendeschneidplatten (3 bzw. 3a und 3b) in radialer und in axialer Richtung spanen können, und
- bei welchem jede Wendeschneidplatte (3 bzw. 3a und 3b) durch eine einzelne, einen flächenzentralen Durchlaß (28) durchsetzende und rechtwinklig zu ihren beiden Seitenflächen (21 und 22) gerichtet angreifende Spannschraube (11) in einer Vertiefung bzw. Tasche (6 bzw. 13) des Messerträger-Grundkörpers (2) festlegbar ist,
**dadurch gekennzeichnet,**
- **daß** der Umfangsbereich des Messerträger-Grundkörpers (2) gleichmäßig und abwechselnd einerseits an seiner UmfangsMantelfläche (12) und andererseits an seiner Stirnfläche (4) Vertiefungen bzw. Taschen (13 bzw. 6) zur Aufnahme je einer Wendeschneidplatte (3 bzw. 3a oder 3b) aufweist,
- **daß** sämtliche - sowohl die stehend als auch die liegend orientierten - Wendeschneidplatten (3b und 3a) eine übereinstimmende Ausbildung bzw. Gestaltung haben,
- **daß** an jeder Wendeschneidplatte (3b und 3a) sowohl im Bereich beider Seitenflächen (21 und 22) als auch im Bereich jeder Endfläche (25 und 26) zu jeder Grundfläche (23) und Deckfläche (24) hin eine Schneidkante (30, 31, 32) ausgebildet ist,
- **daß** dabei sämtliche an die Seitenflächen (21 und 22) und an die Endflächen (25 und 26) angrenzenden Schneidkanten (30, 31, 32) gleiche Schneidengeometrie haben,
- **daß** Spanmulden (33, 34) in die Grundfläche (23) und die Deckfläche (24) sowohl entlang der beiden Seitenflächen (21 und 22) als auch entlang der beiden Endflächen (25 und 26) eingearbeitet sind,
- und **daß** alle entlang der Seitenflächen (21 und 22) verlaufenden Schneidkanten (30) eine Bogenschliff-Kontur haben.

2. Werkzeug nach Anspruch 1,
**dadurch gekennzeichnet,**
**daß** die Seitenflächen (21 und 22) im wesentlichen rechteckig oder quadratisch begrenzt sind und sich Schneidkanten (30) an den den Grundflächen (23) und Deckflächen (24) benachbarten, parallelen Längskanten befinden.

3. Werkzeug nach einem der Ansprüche 1 und 2,
**dadurch gekennzeichnet,**
**daß** die Grundflächen (23) und Deckflächen (24) rechteckig begrenzt sind und sich Schneidkanten (31) an den den Endflächen (25 und 26) benachbarten, parallelen Querkanten befinden.

4. Werkzeug nach einem der Ansprüche 1 bis 3,
**dadurch gekennzeichnet,**
**daß** von den Seitenflächen (21 und 22) zu den Endflächen (25 und 26) hin Übergangsradien (27) ausgebildet sind, und daß auch in den Radienbereichen (27) zu den Grundflächen (23) und Deckflächen (24) hin Schneidkanten (32) ausgebildet sind.

5. Werkzeug nach einem der Ansprüche 1 bis 4,
**dadurch gekennzeichnet,**
**daß** die jeweils in Wirkstellung befindlichen Schneidkanten (30 und 32) der an der Umfangs-Mantelfläche (11) des Messerträger-Grundkörpers (2) gelegenen Wendeschneidplatten (3b) in radialer Richtung über die jeweils in Wirkstellung befindlichen Schneidkanten (31 und 32) der an der Stirnfläche (4) des Messerträger-Grundkörpers (2) gelegenen Wendeschneidplatten (3a) geringfügig vorstehen, während die jeweils in Wirkstellung befindlichen Schneidkanten (30 und 32) der an der Stirnfläche (4) des Messerträger-Grundkörpers (2) gelegenen Wendeschneidplatten (3a) in axialer Richtung über die jeweils in Wirkstellung befindlichen Schneidkanten der an der Umfangs-Mantelfläche (11) des Messerträger-Grundkörpers (2) gelegenen Wendeschneidplatten (3b) geringfügig vorstehen (Fig. 9).

## Claims

1. Tool for finishing workpieces by stock removal
- particularly a cutter head (1),
- for example a transverse cutter head,
- with a disk-shaped -- rotatably drivable -- carrier plate main body (2), and
- with multiple cutter plates implemented as indexable tips (3),
- in which the indexable tips (3) are uniformly distributed around the circumference of the carrier plate main body (2) and are arranged so they are removable, replaceable, and/or rotatable,
- in which the indexable tips (3) are mounted both on the lateral circumference (12) and on the face (4) of the carrier plate main body (2),
- in which the indexable tips (3b) provided on the lateral circumference (12) of the carrier plate main body (2) are essentially oriented - vertically - in the direction of its rotational axis (5-5),
- in which the indexable tips (3a) provided on the face (4) of the carrier plate main body (2) are essentially oriented transverse - horizontally - to its rotational axis (5-5),
- in which the cutting edges (30, 31, 32) currently in the active position of all - vertically and horizontally - oriented indexable tips (3 and/or 3a and 3b) can remove stock in the radial and the axial directions, and
- in which each indexable tip (3 and/or 3a and 3b) can be fixed in a depression and/or pocket (6 and/or 13) of the carrier plate main body (2) by one single tensioning screw (11), which penetrates an opening (28) in the center of the surface and engages perpendicular to its two side surfaces (21 and 22),
**characterized in that**,
- the peripheral region of the carrier plate main body (2) has depressions and/or pockets (13 and/or 6) uniformly and alternately located either on its lateral circumference (12) or on its face (4) to receive one indexable tip (3 and/or 3a or 3b) each,
- all of the - both the vertically and the horizontally oriented - indexable tips (3b and 3a) have a uniform implementation and/or design,
- a cutting edge (30, 31, 32) is implemented on each indexable tip (3b and 3a), both in the region of the two lateral surfaces (21 and 22) and in the region of each end surface (25 and 26), toward each bottom surface (23) and top surface (24),
- at the same time, all of the cutting edges (30, 31, 32) bordering the side surfaces (21 and 22) and the end surfaces (25 and 26) have the same cutter geometry,
- cutting channels (33, 34) are incorporated in the bottom surface (23) and the top surface (24) both along the two side surfaces (21 and 22) and along the two end surfaces (25 and 26),
- and all cutting edges (30) running along the side surfaces (21 and 22) have a curved grind contour.

2. Tool according to claim 1, **characterized in that** the side surfaces (21 and 22) are delimited essentially in a square or rectangular shape and cutting edges (30) are located on the parallel longitudinal edges neighboring the bottom surface (23) and top surface (24).

3. Tool according to one of the claims 1 and 2, **characterized in that** the bottom surface (23) and top surface (24) are delimited in a rectangular shape and cutting edges (31) are located on the parallel transverse edges neighboring the end surfaces (25 and 26).

4. Tool according to one of the claims 1 to 3, **characterized in that** transition radii (27) are implemented from the side surfaces (21 and 22) to the end surfaces (25 and 26), and cutting edges (32) are also implemented toward the bottom surface (23) and the top surface (24) in the radii regions (27).

5. Tool according to one of the claims 1 to 4, **characterized in that** the cutting edge (30 and 32) of the indexable tips (3b) lying on the lateral circumference (11) of the carrier plate main body (2) currently located in the active position projects slightly in the radial direction over the cutting edge (31 and 32) of the indexable tips (3a) lying on the face (4) of the carrier plate main body (2), while the cutting edges (30 and 32) of the indexable tips (3a) lying on the face (4) of the carrier plate main body (2) currently located in the active position project slightly in the axial direction over the cutting edges of the indexable tips (3b) lying on the lateral circumference (11) of the carrier plate main body (2) currently located in the active position (Fig. 9).

## Revendications

1. Outil pour l'usinage simple par enlèvement de copeaux de pièces
- en particulier tête de couteau de fraisage (1),
- comme par ex. tête de fraisage à coupe frontale,
- avec un corps principal porte-couteau (2) en forme de disque - pouvant être entraîné en rotation - et
- avec une multiplicité de plaquettes de couteaux conçues comme des plaquettes de coupe amovibles (3),
- sur lequel les plaquettes amovibles (3) sont disposées dans la zone du volume du corps principal porte-couteau (2) avec une répartition régulière, de manière à pouvoir être enlevées, échangées et/ou remplacées,
- sur lequel les plaquettes amovibles (3) sont montées aussi bien sur la surface de volume de la chemise (12) que sur la surface frontale (4) du corps principal porte-couteau (2),
- sur lequel les plaquettes amovibles (3b) prévues sur la surface de volume de la chemise (12) du corps principal porte-couteau (2) sont globalement orientées dans le sens de son axe de rotation (5-5) - verticalement -,
- sur lequel les plaquettes amovibles (3a) prévues sur la surface frontale (4) du corps principal porte-couteau (2) sont globalement orientées transversalement par rapport à son axe de rotation (5-5) - horizontalement -,
- sur lequel les couteaux (30, 31, 32) respectivement en position d'action de toutes les plaquettes amovibles orientées - verticalement et horizontalement - (3 ou 3a et 3b) peuvent usiner dans le sens radial et axial et
- sur lequel chaque plaquette amovible (3 ou 3a et 3b) peut être fixée dans un creux ou une poche (6 ou 13) du corps principal porte-couteau (2) par une vis de serrage distincte (11) en contact traversant un passage (28) au centre de la surface et orientée perpendiculairement à ses deux surfaces latérales (21 et 22),
**caractérisé en ce que**
- la zone du volume du corps principal porte-couteau (2) présente, de manière régulière et alternative, d'une part sur sa surface de volume de chemise (12) et d'autre part sur sa surface frontale (4), des creux ou poches (13 ou 6) destinés à recevoir chacun une plaquette amovible (3 ou 3a ou 3b),
- toutes les plaquettes amovibles (3b et 3a) - orientées aussi bien verticalement qu'horizontalement - ont une forme ou configuration concordante,
- sur chaque plaquette amovible (3b et 3a), aussi bien dans la zone des deux surfaces latérales (21 et 22) que dans la zone de chaque surface d'extrémité (25 et 26) en direction de chaque surface de base (23) et de couverture (24), une arête coupante (30, 31, 32) est prévue,
- toutes les arêtes coupantes (30, 31, 32) adjacentes aux surfaces latérales (21 et 22) et aux surfaces d'extrémité (25 et 26) ont une géométrie de coupe identique,
- des réceptacles de copeaux (33, 34) sont usinés dans la surface de base (23) et la surface de couverture (24) aussi bien le long des deux surfaces latérales (21 et 22) que le long des deux surfaces d'extrémité (25 et 26),
- et toutes les arêtes coupantes (30) suivant le long des surfaces latérales (21 et 22) ont un contour de rectification arqué.

2. Outil selon la revendication 1, **caractérisé en ce que** les surfaces latérales (21 et 22) sont d'une délimitation globalement quadrangulaire ou carrée et que des arêtes coupantes (30) se trouvent sur les arêtes longitudinales parallèles voisines des surfaces de base (23) et des surfaces de couverture (24).

3. Outil selon une des revendications 1 et 2, **caractérisé en ce que** les surfaces de base (23) et de couverture (24) sont d'une délimitation quadrangulaire et que des arêtes coupantes (31) se trouvent sur les arêtes transversales parallèles voisines des surfaces d'extrémité (25 et 26).

4. Outil selon une des revendications 1 à 3, **caractérisé en ce que** des rayons de transition (27) des surfaces latérales (21 et 22) aux surfaces d'extrémité (25 et 26) sont prévus et qu'également dans les zones des rayons (27), en allant vers les surfaces de base (23) et les surfaces de couverture (24), des arêtes coupantes (32) sont prévues.

5. Outil selon une des revendications 1 à 4, **caractérisé en ce que** les arêtes latérales (30 et 32) respectivement en position d'action des plaquettes amovibles (3b) posées à plat sur la surface de volume de chemise (11) du corps principal porte-outil (2) s'avancent légèrement, dans le sens radial, au dessus des arêtes coupantes (31 et 32) en position d'action des plaquettes amovibles (3a) posées à plat sur la surface frontale (4) du corps principal porte-outil (2), alors que les arêtes coupantes (30 et 32) respectivement en position d'action des plaquettes amovibles (3a) posées en plat sur la surface frontale (4) du corps principal porte-outil (2) s'avancent légèrement, dans le sens axial, au dessus des arêtes coupantes respectivement en position d'action des plaquettes amovibles (3b) posées à plat sur la surface de volume de chemise (11) du corps principal porte-outil (2).
